# FASCICULE DE BREVET EUROPEEN

(11) **EP 3 122 172 B1**
(45) Date de publication et mention de la délivrance du brevet: **19.06.2019**
(21) Numéro de dépôt: 15715850.2
(22) Date de dépôt: 24.03.2015
(51) Int. Cl.: A01G 9/24, F24S 30/425, H02S 20/30, H02S 20/10

(54) **PROCÉDÉ DE PRODUCTION D'ÉNERGIE ÉLECTRIQUE ADAPTÉ AUX CULTURES**
STROMERZEUGUNGSVERFAHREN FÜR ERNTEPFLANZEN
ELECTRICITY GENERATION METHOD ADAPTED TO CROPS

(30) Priorité: 26.03.2014 FR 1452587
(43) Date de publication de la demande: 01.02.2017
(73) Titulaire: Sun'R, 75009 Paris (FR)
(72) Inventeur: NOGIER, Antoine, 75017 Paris (FR)
(74) Mandataire: Nony
(86) Numéro de dépôt international: PCT/IB2015/052148
(87) Numéro de publication internationale: WO 2015/145351

(56) Documents cités:
- WO-A1-2011/047828
- WO-A2-2013/056285
- CH-A2- 706 132
- DE-A1-102013 002 825
- FR-A1- 2 889 787
- US-A1- 2008 148 631
- US-A1- 2010 263 660
- C. DUPRAZ ET AL.: "Combining solar photovoltaic panels and food crops for optimising land use: Towards new agrivoltaic schemes", Renewable Energy, vol. 36, no. 10 octobre 2011 (2011-10), pages 2725-2732, XP002733453, ISSN: 0960-1481, DOI: 10.1016/j.renene.2011.03.005 Extrait de l'Internet: URL:http://www.sciencedirect.com/science/a rticle/pii/S0960148111001194 [extrait le 2014-11-14] cité dans la demande
- H. MARROU ET AL.: "Productivity and radiation use efficiency of lettuces grown in the partial shade of photovoltaic panels", European Journal of Agronomy, vol. 44 janvier 2013 (2013-01), pages 54-66, XP002733454, ISSN: 1161-0301, DOI: 10.1016/j.eja.2012.08.003 Extrait de l'Internet: URL:http://www.sciencedirect.com/science/a rticle/pii/S1161030112001177 [extrait le 2014-11-14]
- H. MARROU ET AL.: "Microclimate under agrivoltaic systems: Is crop growth rate affected in the partial shade of solar panels ?", Agricultural and Forest Meteorology, vol. 177 15 août 2013 (2013-08-15), pages 117-132, XP002733455, ISSN: 0168-1923, DOI: 10.1016/j.agrformet.2013.04.012 Extrait de l'Internet: URL:http://www.sciencedirect.com/science/a rticle/pii/S0168192313000890 [extrait le 2014-11-14]
- BRIGITTE CAUVIN: "Manger et s'éclairer", INRA Magazine, no. 22 octobre 2012 (2012-10), pages 30-31, XP002733456, ISSN: 1958-3923 Extrait de l'Internet: URL:http://inra.dam.front.pad.brainsonic.c om/ressources/afile/227808-070ba-resource- inra-magazine-no22.html [extrait le 2014-11-14]
- JUNKO MOVELLAN: "Japan Next-Generation Farmers Cultivate Crops and Solar Energy", Renewable Energy World , 10 octobre 2013 (2013-10-10), XP002733457, Extrait de l'Internet: URL:http://www.renewableenergyworld.com/re a/news/article/2013/10/japan-next-generati on-farmers-cultivate-agriculture-and-solar -energy [extrait le 2014-11-14] cité dans la demande

## Description

La présente invention concerne la production d'énergie électrique à l'aide de capteurs photovoltaïques.

La production d'énergie électrique d'origine photovoltaïque connaît un important développement.

Dans certaines zones géographiques, l'implantation des capteurs peut s'effectuer sans porter préjudice à l'étendue des zones cultivables.

Dans d'autres zones, l'implantation des capteurs a lieu au détriment des surfaces cultivables.

Des essais ont été effectués afin de concilier production électrique et préservation des étendues cultivables.

Il a ainsi été proposé dans l'article "Japan Next-Generation Farmers Cultivate Crops and Solar Energy", Renewable Energy world 10.10.2013, de cultiver des végétaux dans des zones affectées par l'ombre portée au sol par les capteurs.

La publication "Combining Solar photovoltaic panels and food crops for optimising land use : Towards new agrivoltaic schemes", Renewable Energy 36 (2011)2725-2732 rapporte des résultats d'essais comparatifs menés dans le sud de la France, faisant apparaître l'effet bénéfique de l'ombre apportée par les panneaux sur les cultures.

La thèse intitulée "Produire des aliments ou de l'énergie : faut-il vraiment choisir?" soutenue par Hélène Marroux le 18 décembre 2012 (Sup Agro Montpellier) suggère d'ajuster l'inclinaison des capteurs pendant une période de l'année pour stimuler la productivité des cultures. Il est également décrit d'utiliser des panneaux mobiles en translation ou rotation de façon à homogénéiser dans le temps la quantité de rayonnement reçue par chaque portion de la parcelle cultivée à l'ombre des panneaux.

La publication WO 2011/047828 A1 divulgue une installation comportant des panneaux solaires pouvant prendre une orientation particulière en cas de pluie, afin de faciliter la collecte de l'eau en vue de son utilisation en irrigation des cultures.

La demande US 2008/0148631 A1 divulgue un procédé de lutte contre la désertification utilisant des panneaux solaires commandés en pivotement pour créer de l'ombre dans la journée et faciliter l'humidification du sol pendant la nuit.

Cette publication ne prévoit pas de commander précisément l'orientation des panneaux dans un but d'optimisation de la production photovoltaïque et/ou de la pousse des végétaux.

La demande CH 706132 décrit une installation de production d'énergie électrique à l'aide de production d'énergie électrique à l'aide de panneaux solaires disposés au-dessus de cultures, en particulier de vigne. Les panneaux sont supportés par des poteaux qui servent également à accrocher les fils de culture de la vigne.

Les panneaux solaires peuvent être au moins partiellement transparents afin de minimiser l'effet d'ombrage des cultures.

Les panneaux peuvent être disposés de façon à optimiser la production solaire pendant une partie de l'année et à optimiser la qualité de la production agricole le reste de l'année.

US 2010/0263660 divulgue un dispositif de positionnement de panneaux photovoltaïques par-dessus des cultures agricoles. L'orientation est panneaux est contrôlée par un signal déterminé au moins en partie par des données relatives à l'ensoleillement et au cycle de croissance des plantes.

Il existe un besoin pour améliorer encore les systèmes existants permettant une culture de végétaux et une production d'énergie électrique.

L'invention répond à ce besoin grâce à un procédé de production d'énergie électrique selon la revendication 1.

L'invention permet d'exploiter au mieux la présence des capteurs solaires pour faire bénéficier les cultures d'un ensoleillement variable en fonction de leur besoin en lumière et/ou en chaleur et/ou pour agir sur le stress hydrique.

Ainsi, la présence des capteurs solaires ne constitue plus un obstacle à la culture des végétaux mais au contraire une opportunité. Par exemple, l'orientation des capteurs peut être commandée de façon à éviter automatiquement, en période de canicule, que les végétaux ne soient soumis à un échauffement excessif. A contrario, au printemps, l'orientation peut être commandée de façon à maximiser automatiquement le réchauffement du sol, y compris la nuit par réflexion des infrarouges émis depuis le sol, afin de favoriser la germination.

De préférence, l'orientation des capteurs est modifiée par des actuateurs électriques, tels que des vérins électriques par exemple. L'énergie utilisée par les actuateurs peut avoir été fournie par les capteurs.

L'invention permet d'améliorer la production agricole par rapport à une culture en plein soleil, ou un rendement de référence, et de produire davantage d'énergie électrique qu'avec des capteurs dont l'orientation n'est pas modifiable à l'aide d'actuateurs.

L'orientation des capteurs peut être modifiée en fonction d'une loi de commande cherchant à obtenir un maximum qualitatif et/ou quantitatif. Par exemple, dans le cas de cultures maraichères, l'orientation des capteurs peut s'effectuer selon un algorithme d'asservissement de l'orientation des capteurs visant à éviter l'échauffement excessif des feuilles. La présence des capteurs peut ainsi être mise à profit pour intercepter de façon adéquate la lumière afin d'optimiser la photosynthèse et obtenir un rendement de production supérieur à ce qu'il serait en l'absence totale d'ombre. Dans le cas de la culture de la vigne, l'orientation des capteurs peut être choisie en fonction du degré de sucre recherché dans le raisin, et au final de la qualité du vin obtenu.

L'orientation des capteurs peut être commandée en fonction d'une quantité d'énergie lumineuse cible à atteindre, cette quantité d'énergie lumineuse cible étant notamment dépendante du besoin des cultures, du déficit ou de l'excédent d'énergie de la veille ou des jours précédents, et/ou des prévisions météorologiques.

De préférence, l'orientation des capteurs est modifiée en fonction de données météorologiques et notamment i) d'au moins un historique d'ensoleillement des cultures et d'un historique de chaleur reçue par les cultures, et d'un historique de pluviométrie et ii) d'un objectif fixé pour la journée en cours, d'une quantité d'ensoleillement, de chaleur et/ou de pluviométrie à recevoir par la plante ainsi que de limites de températures à ne pas dépasser. Cet historique peut être réalisé localement, grâce à la détection locale de la température, de l'ensoleillement, de la pluviométrie et/ou de l'hygrométrie du sol. Par exemple, si l'ensoleillement des jours précédents est considéré comme répondant aux besoins de lumière et/ou de chaleur des cultures sur une période donnée, les capteurs peuvent être orientés à chaque instant de façon à respecter les objectifs de la journée, en privilégiant la production électrique. Si par contre l'ensoleillement des jours précédents est considéré comme répondant insuffisamment aux besoins en lumière et/ou chaleur des cultures, alors les capteurs sont orientés de façon à privilégier le besoin d'ensoleillement des cultures. Dans ce cas, l'orientation des capteurs peut ne pas correspondre à l'optimisation de la production électrique en fonction de la position du soleil.

Outre la position géographique et l'inclinaison des installations, le pilotage informatique des capteurs s'effectue de préférence en fonction d'une loi de commande spécifique à chaque variété végétale cultivée.

Parmi les paramètres pouvant entrer dans la sélection de la loi de commande à partir d'une bibliothèque de lois de commande pré-établies, et/ou dans l'adaptation d'une loi de commande à la poursuite d'un résultat agricole prédéfini, peuvent figurer la variété cultivée, ainsi que des critères quantitatifs ou qualitatifs, tels que la recherche d'une production agricole maximale ou d'une qualité particulière du végétal cultivé.

Les capteurs peuvent être orientés le soir ou durant la nuit de façon à réfléchir au maximum ou au minimum vers le sol le rayonnement thermique du sol, pendant la nuit, afin de réguler la température du sol (réchauffement ou refroidissement). Le pilotage de l'orientation des capteurs pour la nuit peut s'effectuer par exemple selon le gradient de température atmosphère-sol observé ou prévu, et selon l'objectif poursuivi (refroidir ou réchauffer le sol). Par exemple, s'il existe un besoin de refroidir le sol et que le gradient atmosphère-sol est négatif (le sol est plus chaud que l'air), les capteurs peuvent être orientés perpendiculairement au sol. Ainsi, avant chaque modification de l'orientation des capteurs, il peut être déterminé si la consommation d'énergie électrique pour cette modification est nécessaire au regard du bénéfice attendu pour les cultures.

Le procédé comporte avantageusement la mesure de la température au niveau des cultures et la commande de l'orientation des capteurs s'effectue au moins en fonction de la température mesurée.

Les capteurs solaires peuvent être disposés en rangées parallèles espacées.

Les capteurs sont de préférence orientables autour d'un seul axe de rotation, qui est de préférence horizontal.

L'axe de rotation peut être aligné sur la direction Nord-Sud ou en variante faire un angle avec celle-ci.

L'orientation des capteurs dépend avantageusement de l'état de développement des cultures. Ainsi, pendant l'hiver, l'orientation peut être commandée de façon à réchauffer le sol en fin de période hivernale, afin de favoriser la germination.

L'orientation des capteurs est de préférence commandée de manière à maintenir les cultures dans une fourchette de température minimale et/ou maximale prédéfinie. Ainsi, pendant les périodes de chaleur, l'orientation des panneaux peut correspondre à une production maximale d'ombre au sol.

L'invention a encore pour objet un système de production d'énergie électrique selon la revendication 8.

Le système peut comporter un capteur de température informant le calculateur de la température locale au niveau des cultures.

Le calculateur peut être agencé pour déterminer l'orientation des capteurs en fonction d'un historique d'ensoleillement et/ou de pluviométrie et/ou de l'état de développement des cultures.

Le calculateur peut être local, auquel cas l'orientation des capteurs peut être déterminée de façon autonome par le calculateur.

Le calculateur peut aussi, en variante, être au moins en partie délocalisé dans le centre de contrôle commande du dispositif.

La structure supportant les capteurs peut être avantageusement utilisée afin de déployer un filet au-dessus des cultures. Ce filet peut avoir trois fonctions
- Protéger les cultures contre la grêle et ceci en lien avec une prévision météorologique
- Protéger les cultures contre les attaques d'animaux
- Réaliser un ombrage supplémentaire sur les cultures, le choix du pouvoir occultant du filet étant réalisé en fonction d'un besoin identifié d'éclairement de la culture, d'un historique d'ensoleillement et/ou d'une prévision d'ensoleillement.
- Participer au contrôle du microclimat nocturne au-dessus de la culture en agissant sur l'échange thermique et d'humidité avec le milieu extérieur, le déploiement étant réalisé en fonction d'un besoin hydrique et/ou thermique identifié de la culture, d'un historique hydrique et/ou thermique et/ou d'éclairement de la culture, d'une mesure de l'état hydrique et/ou thermique de la culture, d'une prévision météorologique.

Le déploiement et le contrôle de ce filet peut être réalisé informatiquement de manière automatique ou manuelle, l'énergie électrique nécessaire à cette opération pouvant être issue de la propre production des capteurs ou venir du réseau si l'installation y est connectée.

Ce système de protection peut être déployé en cas d'alerte de grêle, au-dessus des cultures. Les capteurs peuvent alors être positionnés dans une configuration de moindre exposition aux grêlons, par exemple le plus verticalement possible.

L'invention a encore pour objet un procédé de culture de végétaux, dans lequel les végétaux sont cultivés de façon à être affectés par l'ombre portée au sol par des capteurs d'un système selon l'invention, tel que défini plus haut.

Cette culture s'effectue dans un système ouvert, sans contrôle des variables d'humidité, température, vent, autrement qu'à travers une modification de l'orientation des capteurs.

Les capteurs peuvent subir une modification de leur orientation intra-journalière, mieux intra-horaire.

Le pilotage des capteurs s'effectue autrement que pour assurer le simple suivi de la course du soleil, pendant des périodes où l'orientation des capteurs est choisie de façon à répondre aux besoins des cultures.

La loi de commande de l'orientation des capteurs peut notamment être basée sur le niveau de stress de la culture. Le modèle de stress évalue ce critère par exemple en fonction d'un historique d'ensoleillement et/ou de température de la culture, ainsi que d'une mesure de la température foliaire de la culture. Les paramètres d'entrée et de sortie utilisables par ce modèle de stress ne se résumant pas uniquement aux paramètres susmentionnés.

L'invention a encore pour objet, indépendamment ou en combinaison avec ce qui précède, un procédé de culture de végétaux, dans lequel des éléments d'occultation orientables sont disposés au-dessus des cultures, l'ombre projetée sur les cultures étant modifiée par le changement d'orientation des éléments d'occultation, ce procédé étant caractérisé par le fait que l'orientation des éléments d'occultation est pilotée informatiquement de façon automatique, de préférence à partir au moins de données représentatives de conditions locales d'environnement des cultures, pour agir sur les conditions microclimatiques des cultures par le biais d'un changement d'orientation des éléments d'occultation, notamment afin de placer les cultures dans des conditions microclimatiques plus favorables à l'obtention d'un résultat agricole recherché. Selon cet aspect de l'invention, les éléments d'occultation peuvent être des capteurs photovoltaïques tels que définis plus haut, ou être des panneaux plus ou moins opaques, sans fonction photovoltaïque.

L'orientation des éléments d'occultation peut être modifiée en fonction d'une loi de commande cherchant à obtenir un maximum qualitatif et/ou quantitatif. Par exemple, dans le cas de cultures maraichères, l'orientation des éléments d'occultation peut s'effectuer selon un algorithme d'asservissement de l'orientation des éléments d'occultation visant à éviter l'échauffement excessif des feuilles. La présence des éléments d'occultation peut ainsi être mise à profit pour intercepter de façon adéquate la lumière afin d'optimiser la photosynthèse et obtenir un rendement de production supérieur à ce qu'il serait en l'absence totale d'ombre. Dans le cas de la culture de la vigne, l'orientation des éléments d'occultation peut être choisie en fonction du degré de sucre recherché dans le raisin, et au final de la qualité du vin obtenu.

L'orientation des éléments d'occultation peut être commandée en fonction d'une quantité d'énergie lumineuse cible à atteindre, cette quantité d'énergie lumineuse cible étant notamment dépendante du besoin des cultures, du déficit ou de l'excédent d'énergie de la veille ou des jours précédents, et/ou des prévisions météorologiques.

De préférence, l'orientation des éléments d'occultation est modifiée en fonction de données météorologiques et notamment i) d'au moins un historique d'ensoleillement des cultures et d'un historique de chaleur reçue par les cultures, et/ou d'un historique de pluviométrie et ii) d'un objectif fixé pour la journée en cours, d'une quantité d'ensoleillement, de chaleur et/ou de pluviométrie à recevoir par la plante ainsi que de limites de températures à ne pas dépasser. Cet historique peut être réalisé localement, grâce à la détection locale de la température, de l'ensoleillement, de la pluviométrie et/ou de l'hygrométrie du sol.

Le pilotage informatique des éléments d'occultation s'effectue de préférence en fonction d'une loi de commande spécifique à chaque variété végétale cultivée.

Parmi les paramètres pouvant entrer dans la sélection de la loi de commande à partir d'une bibliothèque de lois de commande préétablies, et/ou dans l'adaptation d'une loi de commande à la poursuite d'un résultat agricole prédéfini, peuvent figurer la variété cultivée, ainsi que des critères quantitatifs ou qualitatifs, tels que la recherche d'une production agricole maximale ou d'une qualité particulière du végétal cultivé.

Les éléments d'occultation peuvent être orientés le soir ou durant la nuit de façon à réfléchir au maximum ou au minimum vers le sol le rayonnement thermique du sol, pendant la nuit, afin de réguler la température du sol (réchauffement ou refroidissement). Le pilotage de l'orientation des éléments d'occultation pour la nuit peut s'effectuer par exemple selon le gradient de température atmosphère-sol observé ou prévu, et selon l'objectif poursuivi (refroidir ou réchauffer le sol). Par exemple, s'il existe un besoin de refroidir le sol et que le gradient atmosphère-sol est négatif (le sol est plus chaud que l'air), les éléments d'occultation peuvent être orientés perpendiculairement au sol. Ainsi, avant chaque modification de l'orientation des éléments d'occultation, il peut être déterminé si la consommation d'énergie électrique pour cette modification est nécessaire au regard du bénéfice attendu pour les cultures.

Le procédé de culture comporte avantageusement la mesure de la température au niveau des cultures et la commande de l'orientation des éléments d'occultation s'effectue au moins en fonction de la température mesurée.

Les éléments d'occultation peuvent être disposés en rangées parallèles espacées.

Les éléments d'occultation sont de préférence orientables autour d'un seul axe de rotation, qui est de préférence horizontal.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure 1 représente de façon schématique un système de production d'énergie électrique selon l'invention,
- la figure 2 représente de façon schématique un système de commande de l'orientation d'un capteur solaire selon l'invention,
- la figure 3 représente de façon schématique l'évolution dans le temps de l'énergie lumineuse reçue par les cultures et les capteurs,
- les figures 4 à 7 illustrent des exemples de commande des capteurs en fonction du temps,
- la figure 8 est une représentation simplifiée d'un modèle de stress de culture basé sur la température foliaire et
- la figure 9 est une vue analogue à la figure 1 d'une variante de réalisation.

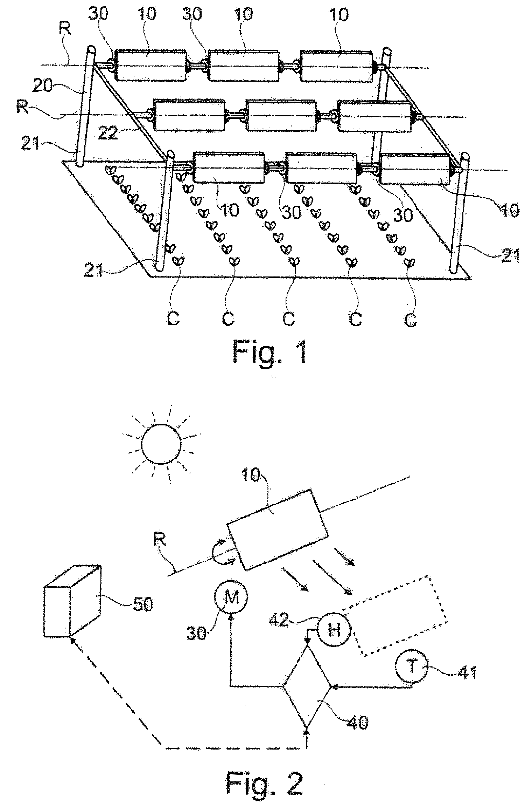

On a représenté à la figure 1 un système de production électrique selon l'invention, comportant une pluralité de capteurs solaires 10 mobiles autour d'axes de rotation respectifs R. Ces capteurs 10 sont maintenus par une structure porteuse 20, permettant de ménager sous les capteurs 10 une hauteur suffisante pour le passage d'engins agricoles, notamment une hauteur comprise entre 3 et 5 m.

La structure porteuse 20 comporte des montants 21 qui supportent une ossature 22 sur laquelle sont articulés les capteurs 10.

Chaque capteur 10 est pivoté autour de l'axe R correspondant à l'aide d'au moins un actuateur 30.

Les actuateurs 30 sont par exemple prévus individuellement pour chaque capteur 10, comme illustré. En variante, un même actuateur 30 peut déplacer en rotation une pluralité de capteurs solaires 10.

Les actuateurs 30 comportent par exemple chacun un ou plusieurs moteurs électriques, et sont constitués par exemple par des servomoteurs.

Les cultures C sont disposées dans l'ombre projetée au sol par les capteurs 10. Les cultures C peuvent être de tout type et par exemple être des cultures maraîchères ou des vignes.

Si l'on se reporte à la figure 2, on voit que la position à donner aux capteurs 10 peut être déterminée par un calculateur local 40 qui est relié via toute interface de puissance adaptée aux actuateurs 30.

Le calculateur 40 reçoit de préférence des informations d'une ou plusieurs sondes locales, par exemple une sonde de température 41 placée au niveau des cultures C et une sonde d'hygrométrie 42 placée dans le sol au niveau des cultures C. D'autres capteurs peuvent être ajoutés, tels qu'un pluviomètre, anémomètre, et/ou une caméra pour visualiser l'état de développement des cultures, ainsi qu'un ou plusieurs biocapteurs, le cas échéant.

Il est particulièrement avantageux, d'une façon générale, d'utiliser un capteur à infrarouge sans contact pour mesurer la température des cultures. On peut ainsi utiliser une camera à infrarouge qui pointe sur les cultures en différents emplacements et permet de calculer une température moyennée spatialement.

Le calculateur 40 peut également échanger des données, par exemple via un réseau de téléphonie sans fil, avec un serveur distant 50, lequel peut par exemple informer le calculateur 40 de la météo à venir.

Le calculateur 40 peut être réalisé à partir de tout micro-ordinateur ou équipement informatique permettant de piloter l'orientation des capteurs 10 en fonction d'une ou plusieurs lois de commande donnant l'orientation à imposer aux capteurs en fonction du lieu, de la date, de l'heure et d'un certain nombre d'autres paramètres liés aux cultures C.

Le calculateur 40 peut ainsi comporter une unité de calcul et une mémoire locale dans laquelle peuvent être enregistrées les données locales mesurées, par exemple de température, d'hygrométrie et de pluviométrie, afin de connaître l'historique des conditions environnementales des cultures.

La mémoire du calculateur peut également comporter des paramètres d'asservissement qui régissent l'orientation des capteurs en fonction des besoins des cultures. Ces paramètres peuvent évoluer dans le temps et, en fonction par exemple de la saison, privilégier l'ensoleillement ou non des cultures.

La ou les lois de commande peuvent être initialement programmées dans le calculateur 40, ou en variante être téléchargées par le calculateur 40 à partir du serveur distant 50, ou encore être réactualisées périodiquement par le serveur distant 50.

Dans un exemple de réalisation, le calculateur 40 présente un fonctionnement autonome. En fonction de la saison, de la date de semis et éventuellement d'autres paramètres renseignés par l'agriculteur, il pilote automatiquement et de façon journalière l'orientation des capteurs 10 de façon à satisfaire au besoin d'ensoleillement, de température, d'hygrométrie, de pluviométrie des cultures sur une période de temps donnée. Dans ce cas, les capteurs sont par exemple orientés pendant une fraction de la journée pour laisser passer le plus de lumière possible, au détriment de la production électrique. Puis, une fois le besoin d'ensoleillement satisfait, les capteurs sont amenés en activant les actuateurs dans une orientation visant à maximiser la production électrique.

Si toutefois la température locale mesurée au niveau des cultures est excessive, ou supérieure à l'objectif fixé, l'orientation des capteurs peut être modifiée pour abriter les cultures du soleil et éviter un échauffement excessif.

Dans une variante de réalisation, le calculateur 40 reçoit des instructions de pilotage des capteurs depuis le serveur distant 50, auquel il peut transmettre par exemple des données d'ensoleillement et de température locales, ainsi que des données concernant les cultures et leur stade de développement. Le serveur 50 transmet en retour au calculateur des informations concernant l'orientation à donner aux capteurs, en temps réel ou sur une certaine période à venir.

Lorsque les capteurs 10 sont orientés pour maximiser la production électrique, ils peuvent suivre en temps réel la course du soleil d'est en ouest.

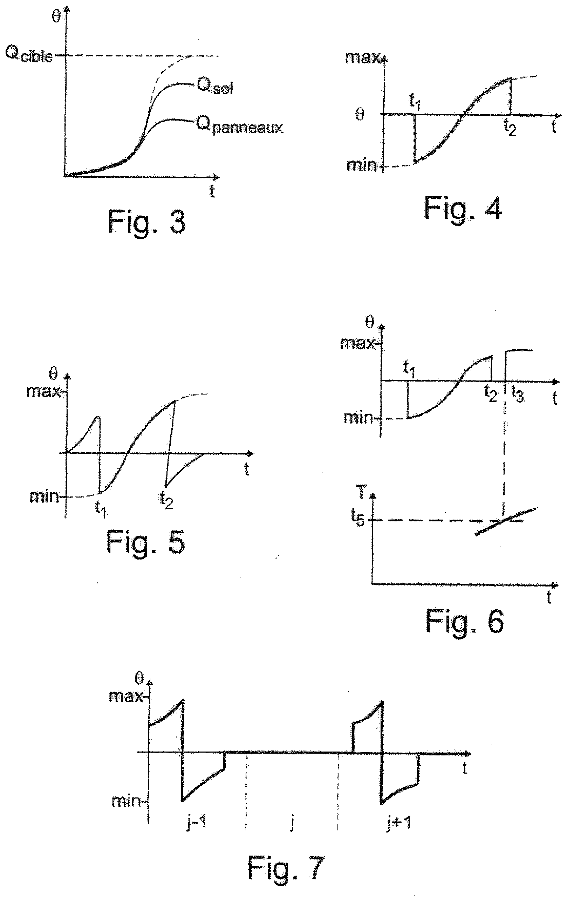

On a représenté à la figure 3 l'évolution de l'énergie lumineuse reçue au cours du temps, pour les capteurs et les cultures. Lorsque les capteurs suivent la course du soleil, ils reçoivent environ un tiers de l'énergie lumineuse. Les cultures en reçoivent les deux tiers. Il est possible d'augmenter la quantité d'énergie reçue par les cultures en jouant sur l'orientation des capteurs de façon à diminuer l'occultation des cultures.

On peut fixer à l'avance une quantité d'énergie cible pour un jour j en fonction du besoin d'énergie lumineuse des cultures, du déficit ou excédent d'énergie reçu la veille ou les jours précédents, et de prévisions météorologiques permettant d'estimer la quantité d'énergie attendue pour ce jour j.

Le cas échéant, le modèle qui fixe la quantité d'énergie cible est plus élaboré et tient compte du prix de l'électricité ou de sa valorisation potentielle sur les marchés.

Sur la figure 3, on a représenté en pointillés la variation au cours du temps de l'énergie reçue jusqu'à atteindre la quantité cible. Pour ce faire, on augmente l'énergie reçue par les cultures en diminuant celle Q' capteurs reçue par les capteurs au profit d'une moindre occultation des cultures.

On a représenté à la figure 4 l'évolution de l'angle des capteurs au cours du temps. En pointillés figure la courbe qui correspond à un suivi classique de la course du soleil.

Pour augmenter l'énergie lumineuse reçue par les cultures, on peut laisser les capteurs horizontaux entre le lever du soleil et t1, puis après t2 jusqu'au coucher du soleil. Entre t1 et t2, l'orientation des capteurs s'effectue de façon à suivre la course du soleil.

Le fait de laisser les panneaux horizontaux ne minimise pas l'occultation mais permet de ne pas consommer d'électricité pour les orienter.

Dans la variante illustrée à la figure 5, entre le lever du soleil et t1 l'orientation des capteurs est modifiée pour laisser passer le maximum de lumière vers les cultures, et de même après t2 jusqu'au coucher du soleil.

Sur la figure 6 on voit que l'on pilote les capteurs comme dans l'exemple de la figure 4. Toutefois, entre t2 et t3 le suivi du soleil est rétabli pour faire bénéficier les cultures d'une occultation maximale afin de protéger ces dernières d'une température excessive. Dans cet exemple, la température des cultures est surveillée, grâce par exemple à une caméra infrarouge. On a supposé dans cet exemple que la température dépasse une valeur limite à l'instant t3. Le système de contrôle du panneau déclenche alors le passage en mode suivi du soleil de t3 au coucher du soleil.

On a représenté un exemple d'évolution de la course angulaire des capteurs en fin de période hivernale sur la figure 7.

On voit sur cette figure que les capteurs sont orientés pendant le jour j-1 pour minimiser l'occultation, en les orientant sensiblement parallèlement aux rayons solaires au cours du temps.

Si les prévisions météorologiques annoncent une période froide sans soleil le jour j, les capteurs peuvent être maintenus horizontaux pendant le jour et la nuit de façon à réfléchir au maximum les infrarouges du sol vers les cultures. Au jour j+1, un pilotage similaire à celui du jour j-1 est effectué.

La quantité d'énergie cible pour le jour j+1 peut être calculée à partir de la quantité d'énergie lumineuse reçue effectivement par les cultures au jour j et, éventuellement, les jours antérieurs. Pour déterminer la quantité lumineuse effectivement reçue on peut utiliser un pyrélomètre ou pyranomètre. Mieux, on calcule cette énergie à partir de celle reçue par les capteurs, connaissant leur orientation et celle du soleil et en utilisant un modèle mathématique qui donne l'énergie moyenne au sol compte-tenu de l'occultation apportée par les capteurs.

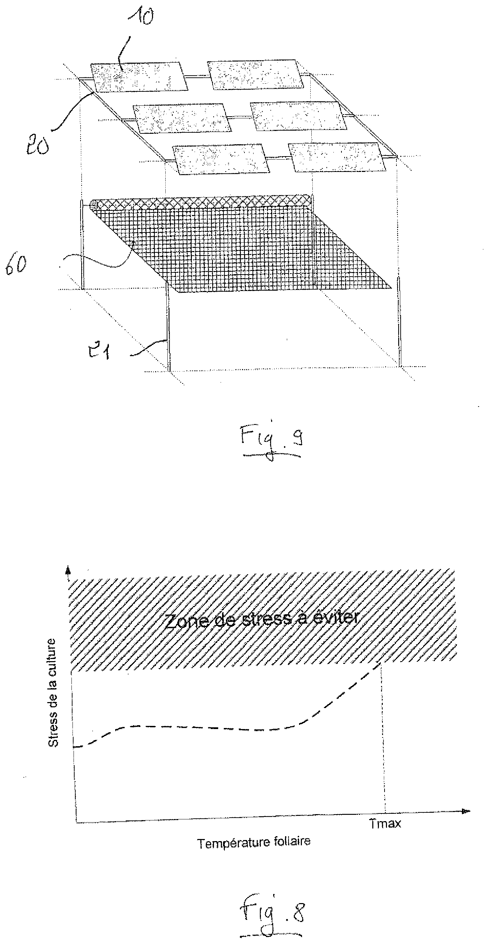

La figure 8 est une représentation simplifiée du niveau de stress de culture basé sur la température foliaire. Cette courbe montre qu'afin de respecter un critère de stress maximum de la culture le système de commande peut chercher à conserver la température foliaire dans un intervalle compris entre Tmin et Tmax en agissant sur l'orientation des capteurs.

Bien entendu, l'invention n'est pas limitée aux exemples qui viennent d'être décrits.

Par exemple, les capteurs utilisés peuvent être disposés de façon à être orientables selon deux axes de rotation.

Sur la figure 9 on a illustré la possibilité d'utiliser la structure porteuse 20 pour supporter un système de protection 60 vis-à-vis des intempéries, notamment de la grêle, par exemple sous la forme d'un filet qui est déployé entre les montants 21 de la structure 20. Ce déploiement peut être automatisé le cas échéant, grâce à des câbles tendus entres les montants 21, présents à demeure. Il est possible dans ce cas de ne pas utiliser les capteurs pour protéger les cultures durant l'averse, et de les orienter par exemple de façon à minimiser le risque qu'ils soient endommagés.

Dans une variante de mise en oeuvre de l'invention, s'intéressant plus particulièrement à l'optimisation du rendement de la production agricole indépendamment de la production électrique, les capteurs sont remplacés par des éléments d'occultation tels que des panneaux en tôle ou en matière composite, ajourés ou non.

L'expression "comportant un" doit se comprendre comme étant synonyme de "comprenant au moins un", sauf si le contraire est spécifié.

## Revendications

1. Procédé de production d'énergie électrique à l'aide de capteurs photovoltaïques orientables (10) disposés au-dessus de cultures (C), l'ombre projetée sur les cultures étant modifiée par le changement d'orientation des capteurs, ce procédé étant **caractérisé par le fait que** l'orientation des capteurs est pilotée informatiquement de façon automatique à partir au moins de données représentatives de conditions locales d'environnement des cultures, choisies parmi la température des cultures, l'hygrométrie du sol et/ou la pluviométrie, pour agir sur les conditions microclimatiques des cultures par le biais d'un changement d'orientation des capteurs, l'orientation des capteurs étant modifiée en fonction au moins d'un historique d'ensoleillement des cultures et de pluviométrie.

2. Procédé selon la revendication 1, les capteurs (10) étant orientés le soir de façon à réfléchir au maximum ou au minimum vers le sol le rayonnement thermique du sol pendant la nuit, notamment en étant positionnés horizontalement et/ou disposés en rangées parallèles espacées.

3. Procédé selon l'une quelconque des revendications précédentes, comportant la mesure de la température des cultures, la commande de l'orientation des capteurs s'effectuant au moins en fonction de la température mesurée, la température étant mesurée à l'aide d'au moins une caméra infrarouge.

4. Procédé selon l'une quelconque des revendications précédentes, les capteurs (10) étant orientables autour d'un seul axe de rotation (R), sensiblement parallèle à la direction Nord-Sud.

5. Procédé selon l'une quelconque des revendications précédentes, les cultures étant des vignes et/ou des cultures maraichères.

6. Procédé selon l'une quelconque des revendications précédentes, l'orientation des capteurs :
- dépendant de l'état de développement des cultures, et/ou
- étant commandée de manière à maintenir les cultures dans une fourchette de température maximale et / ou minimale prédéfinie, et/ou
- étant commandée en fonction d'une quantité d'énergie lumineuse cible à atteindre, cette quantité d'énergie lumineuse cible étant dépendante du besoin des cultures, du déficit ou de l'excédent d'énergie de la veille ou des jours précédents, et/ou des prévisions météorologiques, et/ou
- étant commandée de manière à maintenir les cultures dans un état de stress minimal en ayant recours à un modèle de stress de la culture.

7. Procédé selon l'une quelconque des revendications précédentes, la structure supportant les panneaux étant utilisée afin de déployer un filet (60) au-dessus des cultures dans le but de, protéger ces dernières de la grêle et ceci en lien avec une prévision météorologique et/ou de protéger les cultures contre les attaques d'animaux et/ou, de réaliser un ombrage supplémentaire sur les cultures, le choix du pouvoir occultant du filet étant de préférence réalisé on fonction d'un besoin identifié d'éclairement de la culture, d'un historique d'ensoleillement et/ou d'une prévision d'ensoleillement, de participer au contrôle du microclimat nocturne au-dessus de la culture en agissant sur l'échange thermique et d'humidité avec le milieu extérieur, le déploiement étant réalisé en fonction d'un besoin hydrique et/ou thermique identifié de la culture, d'un historique hydrique et/ou thermique et/ou d'éclairement de la culture, d'une mesure de l'état hydrique et/ou thermique de la culture, d'une prévision météorologique, le déploiement et le contrôle de ce filet étant de préférence réalisé informatiquement de manière automatique ou manuelle, l'énergie électrique nécessaire à cette opération pouvant être issue de la propre production des capteurs ou venir du réseau si l'installation y est connectée.

8. Système de production d'énergie électrique, comportant :
- une structure porteuse (20),
- des capteurs solaires (10) orientables maintenus à distance du sol par la structure porteuse (20),
- un ou plusieurs actuateurs (30) pour modifier l'orientation des capteurs solaires et l'ombre portée au sol,
- un calculateur (40) pour déterminer automatiquement l'orientation à donner aux capteurs en fonction au moins d'un historique d'ensoleillement des cultures et de pluviométrie.

9. Système selon la revendication 8, comportant un capteur de température (41) informant le calculateur de la température locale au niveau des cultures, le capteur de température étant de préférence une caméra infrarouge.

10. Système selon la revendication 8 ou 9, le calculateur (40) étant agencé pour déterminer l'orientation des capteurs en fonction d'un historique d'ensoleillement et/ou de pluviométrie et/ou de l'état de développement des cultures.

11. Système selon l'une quelconque des revendications 8 à 10, le calculateur étant local et l'orientation des capteurs étant déterminée de façon autonome par le calculateur.

12. Système selon l'une quelconque des revendications 8 à 10, le calculateur étant au moins en partie délocalisé.

13. Procédé de culture de végétaux, dans lequel les végétaux sont cultivés de façon à être affectés par l'ombre portée au sol par des capteurs (10) d'un système tel que défini dans l'une quelconque des revendications 8 à 12.

14. Procédé de culture de végétaux, avec un système selon l'une quelconque des revendications 8 à 12, dans lequel des éléments d'occultation orientables sont disposés au-dessus des cultures, l'ombre projetée sur les cultures étant modifiée par le changement d'orientation des éléments d'occultation, ce procédé étant **caractérisé par le fait que** l'orientation des éléments d'occultation est pilotée informatiquement de façon automatique à partir au moins de données représentatives de conditions locales d'environnement des cultures, pour agir sur les conditions microclimatiques des cultures par le biais d'un changement d'orientation des éléments d'occultation, notamment afin de placer les cultures dans des conditions microclimatiques plus favorables à l'obtention d'un résultat agricole recherché

## Patentansprüche

1. Verfahren zur Erzeugung elektrischer Energie mithilfe von ausrichtbaren Photovoltaiksensoren (10), die über Erntepflanzen (C) angeordnet sind, wobei der Schatten, der auf die Erntepflanzen geworfen wird, durch die Ausrichtungsänderung der Sensoren verändert wird, wobei dieses Verfahren **dadurch gekennzeichnet ist, dass** die Ausrichtung der Sensoren zumindest auf Grundlage von Daten per Computer automatisch gesteuert wird, die für örtliche Umgebungsbedingungen der Erntepflanzen repräsentativ sind, die aus der Temperatur der Erntepflanzen, der Hygrometrie des Bodens und/oder der Niederschlagsmessung gewählt sind, um durch eine Ausrichtungsänderung der Sensoren auf die mikroklimatischen Bedingungen der Erntepflanzen einzuwirken, wobei die Ausrichtung der Sensoren in Abhängigkeit von zumindest einem Verlauf von Sonneneinstrahlung der Erntepflanzen und von Niederschlagsmessung verändert wird.

2. Verfahren nach dem Anspruch 1, wobei die Sensoren (10) abends so ausgerichtet werden, dass sie die Wärmestrahlung der Sonne nachts maximal oder minimal zum Boden reflektieren, insbesondere dadurch, dass sie horizontal positioniert und/oder in beabstandeten parallelen Reihen angeordnet werden.

3. Verfahren nach einem der vorhergehenden Ansprüche, umfassend das Messen der Temperatur der Erntepflanzen, wobei das Steuern der Ausrichtung der Sensoren zumindest in Abhängigkeit von der gemessenen Temperatur erfolgt, wobei die Temperatur mithilfe mindestens einer Infrarotkamera gemessen wird.

4. Verfahren nach einem der vorhergehenden Ansprüche, wobei die Sensoren (10) um eine einzelne Drehachse (R) herum ausrichtbar sind, die im Wesentlichen parallel zu der Nord-Süd-Richtung verläuft.

5. Verfahren nach einem der vorhergehenden Ansprüche, wobei die Erntepflanzen Weinstöcke und/oder Gemüse sind.

6. Verfahren nach einem der vorhergehenden Ansprüche, wobei die Ausrichtung der Sensoren:
- vom Entwicklungsstand der Erntepflanzen abhängt, und/oder
- so gesteuert wird, dass die Erntepflanzen in einer vorbestimmten Spanne einer maximalen und/oder minimalen Temperatur gehalten werden, und/oder
- in Abhängigkeit von einer zu erreichenden Soll-Lichtenergiemenge gesteuert wird, wobei diese Soll-Lichtenergiemenge vom Bedarf der Erntepflanzen, vom Energiedefizit oder -überschuss des Vortags oder der vorhergehenden Tage und/oder von den Wettervorhersagen abhängt, und/oder
- so gesteuert wird, dass die Erntepflanzen in einem minimalen Belastungszustand gehalten werden, wobei auf ein Belastungsmodell der Erntepflanze zugegriffen wird.

7. Verfahren nach einem der vorhergehenden Ansprüche, wobei die Struktur, welche die Paneele trägt, genutzt wird, um ein Netz (60) über den Erntepflanzen auszubreiten, um letztere in Verbindung mit einer Wettervorhersage vor Hagel zu schützen und/oder die Erntepflanzen vor Tierangriffen zu schützen und/oder eine zusätzliche Beschattung auf den Erntepflanzen herzustellen, wobei das Abdeckungsvermögen des Netzes vorzugsweise in Abhängigkeit von einem erkannten Beleuchtungsbedarf der Erntepflanze, einem Verlauf von Sonneneinstrahlung und/oder einer Vorhersage von Sonneneinstrahlung hergestellt wird, an der Steuerung des nächtlichen Mikroklimas über der Erntepflanze durch Beeinflussung des Austauschs von Wärme und Feuchtigkeit mit der äußeren Umgebung mitzuwirken, wobei das Ausbreiten in Abhängigkeit von einem erkannten Wasser-und/oder Wärmebedarf der Erntepflanze, einem Wasser-und/oder Wärme- und/oder Beleuchtungsverlauf der Erntepflanze, einer Messung des Wasser- und/oder Wärmezustands der Erntepflanze, einer Wettervorhersage durchgeführt wird, wobei das Ausbreiten und das Steuern dieses Netzes vorzugsweise per Computer automatisch oder manuell durchgeführt wird, wobei die elektrische Energie, die für diesen Vorgang erforderlich ist, von der Eigenproduktion der Sensoren oder vom Netz kommen kann, wenn die Anlage daran angeschlossen ist.

8. System zur Erzeugung elektrischer Energie, aufweisend:
- eine Tragstruktur (20),
- ausrichtbare Sonnensensoren (10), die durch die Tragstruktur (20) vom Boden beabstandet sind,
- einen oder mehrere Betätiger (30), um die Ausrichtung der Sonnensensoren und den auf den Boden geworfenen Schatten zu verändern,
- einen Rechner (40), um automatisch die Ausrichtung zu bestimmen, die den Sensoren in Abhängigkeit von zumindest einem Verlauf von Sonneneinstrahlung der Erntepflanzen und von Niederschlagsmessung zu verleihen ist.

9. System nach Anspruch 8, aufweisend einen Temperatursensor (41), der den Rechner über die örtliche Temperatur an den Erntepflanzen informiert, wobei der Temperatursensor vorzugsweise eine Infrarotkamera ist.

10. System nach Anspruch 8 oder 9, wobei der Rechner (40) angeordnet ist, die Ausrichtung der Sensoren in Abhängigkeit von einem Verlauf von Sonneneinstrahlung und/oder Niederschlagsmessung und/oder von dem Entwicklungsstand der Erntepflanzen zu bestimmen.

11. System nach einem der Ansprüche 8 bis 10, wobei der Rechner lokal ist und die Ausrichtung der Sensoren vom Rechner eigenständig bestimmt wird.

12. System nach einem der Ansprüche 8 bis 10, wobei der Rechner zumindest teilweise ausgelagert ist.

13. Verfahren zum Anbau von Pflanzen, wobei die Pflanzen so angebaut werden, dass sie von dem Schatten beeinflusst werden, der von Sensoren (10) eines Systems nach einem der Ansprüche 8 bis 12 auf den Boden geworfen wird.

14. Verfahren zum Anbau von Pflanzen mit einem System nach einem der Ansprüche 8 bis 12, wobei ausrichtbare Abdeckungselemente über den Erntepflanzen angeordnet sind, wobei der Schatten, der auf die Erntepflanzen geworfen wird, durch die Ausrichtungsänderung der Abdeckungselemente verändert wird, wobei dieses Verfahren **dadurch gekennzeichnet ist, dass** die Ausrichtung der Abdeckungselemente zumindest auf Grundlage von Daten per Computer automatisch gesteuert wird, die für örtliche Umgebungsbedingungen der Erntepflanzen repräsentativ sind, um durch eine Ausrichtungsänderung der Abdeckungselemente auf die mikroklimatischen Bedingungen der Erntepflanzen einzuwirken, insbesondere um die Erntepflanzen in mikroklimatische Bedingungen zu versetzen, die für die Erzielung eines landwirtschaftlichen Ergebnisses günstiger sind.

## Claims

1. A method for generating electrical power using orientable photovoltaic collectors (10) placed above crops (C), the shadow projected onto the crops being modified by the change of orientation of the collectors, this method being **characterized in that** the orientation of the collectors is automatically controlled by computer on the basis at least of data representative of the local environmental conditions of the crops, chosen from the temperature of the crops, the moisture content of the soil and/or rainfall, so as to act on the microclimatic conditions of the crops by way of a change of orientation of the collectors, the orientation of the collectors being modified depending at least on a crop insolation and rainfall history.

2. The method as claimed in claim 1, the collectors (10) being oriented in the evening so as to maximally or minimally reflect toward the ground the thermal radiation of the soil during the night, especially by being positioned horizontally and/or placed in parallel spaced-apart rows.

3. The method as claimed in any one of the preceding claims, including measuring the temperature of the crops, the orientation of the collectors being controlled at least depending on the measured temperature, the temperature being measured using at least one infrared video camera.

4. The method as claimed in any one of the preceding claims, the collectors (10) being orientable about a single axis of rotation (R) that is substantially parallel to the north-south direction.

5. The method as claimed in any one of the preceding claims, the crops being vines and/or market-farming crops

6. The method as claimed in any one of the preceding claims, the orientation of the collectors:
- depending on the state of development of the crops, and/or
- being controlled so as to keep the crops in a preset maximum and/or minimum temperature range, and/or
- being controlled depending on a target amount of light energy to be achieved, this target amount of light energy being dependent on the need of the crops, on the energy deficit or surplus of the previous day or the preceding days, and/or on the weather forecast, and/or
- being controlled so as to keep the crops in a state of minimum stress by recourse to a crop stress model.

7. The method as claimed in any one of the preceding claims, the structure supporting the panels being used in order to deploy a netting (60) above the crops with the aim of protecting the latter from hail, this being done in response to a weather forecast and/or of protecting the crops from animal attacks and/or of increasing the shade on the crops, the choice of the occulting power of the netting preferably being made depending on an identified need of the crop for light, an insolation history and/or an insolation forecast, of participating in the control of the night-time microclimate above the crop by acting on the heat and moisture transfer with the exterior environment, the netting being deployed depending on an identified thermal and/or hydric need of the crop, a hydric and/or thermal and/or light history of the crop, on a measurement of the hydric and/or thermal state of the crop, on a weather forecast, the deployment and the control of this netting preferably being carried out automatically by computer or manually, the electrical power required by this operation possibly being generated by the specific generation capacity of the collectors or coming from the mains if the installation is connected thereto.

8. A system for generating electrical power, including:
- a bearing structure (20),
- orientable solar collectors (10) maintained a distance away from the ground by the bearing structure (20),
- one or more actuators (30) for modifying the orientation of the solar collectors and the shadow cast on the ground, and
- a computer (40) for automatically determining the orientation to give to the collectors depending at least on a crop insolation and rainfall history.

9. The system as claimed in claim 8, including a temperature sensor (41) informing the computer of the local temperature level with the crops, the temperature sensor preferably being an infrared video camera.

10. The system as claimed in claim 8 or 9, the computer (40) being arranged to determine the orientation of the collectors depending on an insolation and/or rainfall history and/or the state of development of the crops.

11. The system as claimed in any one of claims 8 to 10, the computer being local and the orientation of the collectors being determined autonomously by the computer.

12. The system as claimed in any one of claims 8 to 10, the computer being at least partially remote.

13. A method for growing plants, wherein the plants are cultivated so as to be affected by the shadow cast on the ground by the collectors (10) of a system such as defined in any one of claims 8 to 12.

14. A method for growing plants, with a system as claimed in any one of claims 8 to 12, wherein orientable occulting elements are placed above the crops, the shadow projected onto the crops being modified by the change of orientation of the occulting elements, this method being **characterized in that** the orientation of the occulting elements is automatically controlled by computer on the basis at least of data representative of the local environmental conditions of the crops, in order to act on the microclimatic conditions of the crops by way of a change of orientation of the occulting elements and especially in order to place the crops under microclimatic conditions that are more favorable to the obtainment of a sought-after agricultural result.
